# EUROPEAN PATENT APPLICATION

(11) **EP 2 827 234 A1**
(43) Date of publication of application: **21.01.2015**
(21) Application number: 13760338.7
(22) Date of filing: 18.01.2013
(51) Int. Cl.: G06F 3/0488, G06F 3/041

(54) **ELECTRONIC DEVICE, INFORMATION PROCESSING METHOD, AND PROGRAM**

(30) Priority: 14.03.2012 JP 2012057226
(71) Applicant: NEC CASIO Mobile Communications, Ltd., Kawasaki-shi, Kanagawa 211-8666 (JP)
(72) Inventor: SATO, Erina, Kawasaki-shi, Kanagawa 211-8666 (JP)
(74) Representative: Vossius & Partner
(86) International application number: PCT/JP2013/050973
(87) International publication number: WO 2013/136838

(57) **Abstract**

This electronic device includes: a manipulation unit (12) that detects manipulation performed upon a display unit (15) by a manipulation means, determines an effective area on the basis of a detected area that is the area that was detected, and outputs the effective area; and a control unit (17) that identifies a designated area, which is the area that was designated by the manipulation means on the basis of the effective area. The control unit (17) sets the effective area in accordance with display content that is displayed on the display unit (15).

## Description

### Technical Field

The present invention relates to an electronic device that incorporates a touch panel, an information processing method, and a program for causing a computer to execute the method.

### Background Art

In recent years, many electronic devices have come to incorporate touch panels. Upon detecting the contact of a user's finger or stylus, touch panels compute the contact coordinates based on information of the contact area, which is the area of contact of the user's finger or stylus.

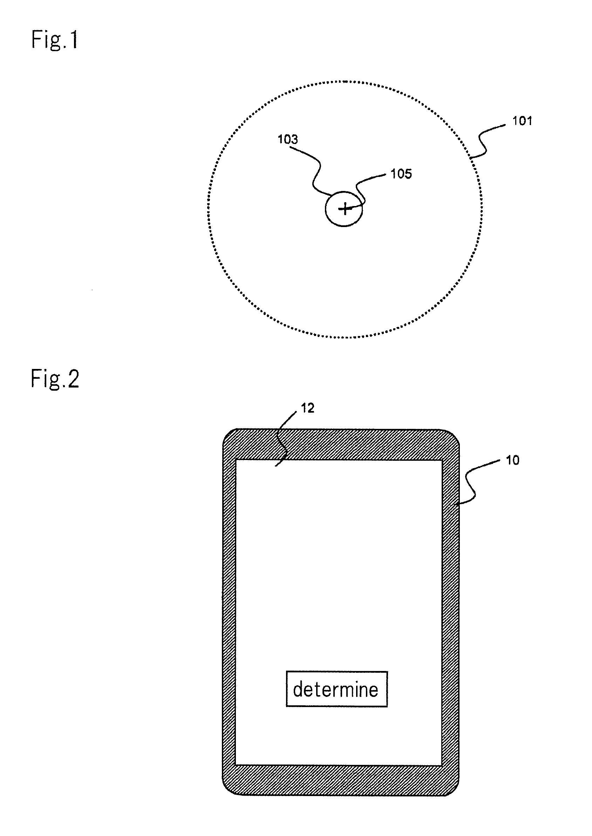

In a touch panel of the mode that detects electrical fluctuations, the actual area of the detected contact area includes a certain amount of error due to the influence of electrical noise from the touch panel drive circuit and the body of the electronic device. In addition, because the computation of contact area for identifying the area designated by the user is at most an estimate, and the value of the computed contact coordinates sometimes includes error. These cases of error are next described with reference to FIG. 1.

FIG. 1 is a view for describing the contact area and contact coordinates on a touch panel of a related electronic device.

When the user touches the touch panel, the touch panel detects contact area 101 shown by the broken line in FIG. 1. As described hereinabove, contact area 101 includes error arising from electrical noise. Next, the touch panel computes the center coordinates of contact area 101 based on coordinates that have been set in advance in the detectable region, and takes these center coordinates as contact coordinates 105 that indicate the area designated by the user. Because the shape of contact area 101 is not limited to the absolutely circular case shown in FIG. 1, contact coordinates 105 may include errors.

As described with reference to FIG. 1, the contact coordinates contain two layers of error. As a result, initial setting referred to as calibration for correcting error is typically carried out before beginning of use of an electronic device. In Patent Document 1, a data correction circuit is disclosed for finding, based on data having great variation influenced by the various types of noise as well as the error and distortion inherent to the device, accurate true-value data in which this variation has been corrected.

Nevertheless, fluctuations occur in the error due to electric noise and fluctuation over time of the contact area, and the influence of fluctuation over time cannot be eliminated by a predetermined calibration value. As a result, as shown in FIG. 1, taking the computed contact coordinates as the center, a predetermined area in which contact coordinates are assumed to fluctuate due to fluctuation of error is taken as effective area 103, and effective area 103 is used as the area that the user selected by input manipulation.

### Literature of the Prior Art

### Patent Documents

Patent Document 1: Japanese Unexamined Patent Application Publication No. H 10-333835

### Summary of the Invention

If the effective area is only one type of area that is determined in advance, when a user attempts to designate an item displayed on a display screen and touches the spot in which the item is displayed with his or her finger, the touch panel may not determine that the user designated that item if a portion of the effective area protrudes beyond the borders of the item. Items displayed on a display screen are of various shapes and sizes, and problems therefore arise regarding the difficulty of setting an effective area of one type of area that can correspond to every item.

An exemplary object of the invention is to provide an electronic device, an information processing method, and a program for causing a computer to execute the method that can improve operability and prevent erroneous input or erroneous manipulation.

An electronic device according to an exemplary aspect of the invention includes: a manipulation unit that detects manipulation by a manipulation means with respect to a display unit and that determines and supplies an effective area based on a detected area that is the area that was detected; and a control unit that identifies a designated area that is the area that was designated by the manipulation body based on the effective area; wherein the control unit sets the effective area in accordance with the display content that is displayed on the display unit.

In addition, an electronic device according to an exemplary aspect of the invention includes: a manipulation unit that detects manipulation by a manipulation means with respect to a display unit and that determines and supplies a first effective area based on a detected area that is the area that was detected; and a control unit that, based on a second effective area that was recognized according to the first effective area, identifies a designated area that is the area designated by the manipulation means; wherein the control unit sets the second effective area in accordance with the display content that is displayed on the display unit.

An information processing method according to an exemplary aspect of the invention is an information processing method realized by an electronic device that has a manipulation unit and a control unit and includes steps of: the manipulation unit detecting manipulation by a manipulation means with respect to a display unit and determining and supplying as output a first effective area based on a detected area that is the area that was detected; a control unit recognizing a second effective area based on the first effective area according to the display content that is displayed on the display unit; and the control unit identifying a designated area that is an area that was designated by the manipulation means based on the second effective area.

A program according to an exemplary aspect of the invention is program that causes a computer that is equipped with a manipulation unit to execute procedures of: the manipulation unit detecting manipulation by a manipulation means with respect to a display unit and, upon determining a first effective area based on a detected area that is the area that was detected, recognizing a second effective area based on the first effective area according to the display content that is displayed on the display unit; and identifying a designated area that is an area designated by the manipulation means based on the second effective area.

### Brief Description of the Drawings

FIG. 1 is a view for describing the contact area and contact coordinates on a touch panel of a related electronic device.
FIG. 2 is an outer perspective view showing an example of the portable terminal of the first exemplary embodiment.
FIG. 3 is a block diagram showing an example of the configuration of the portable terminal shown in FIG. 2.
FIG. 4 shows an example of the coordinates regarding the detectable region of the touch panel.
FIG. 5 is a view for describing the method of detecting a contact area.
FIG. 6A is a view for describing an effective area that the control unit shown in FIG. 3 sets on a touch panel.
FIG. 6B is a view for describing an effective area that the control unit shown in FIG. 3 sets on a touch panel.
FIG. 6C is a view for describing an effective area that the control unit shown in FIG. 3 sets on a touch panel.
FIG. 7 is a flow chart that shows the operating procedures of the portable terminal of the first exemplary embodiment.
FIG. 8 is a view for describing the operation of the portable terminal of the first exemplary embodiment.
FIG. 9 is a view for describing the operation of the portable terminal of the Working Example 1.
FIG. 10 is a view for describing the operation of the portable terminal of Working Example 2.
FIG. 11 is a view for describing the operation of the portable terminal of Working Example 3.
FIG. 12 is a flow chart showing the operating procedures of the portable terminal of the second exemplary embodiment.

### Description of Embodiments

Exemplary embodiments of the present invention are next described.

The exemplary embodiments described hereinbelow relate to a case in which the electronic device is a portable terminal that includes: a portable telephone that includes a smartphone, a PHS (Personal Handyphone System), a PDA (Personal Data Assistant or Personal Digital Assistant: a portable personal information communication device), a portable game device, a tablet PC (Personal Computer), and a notebook PC.

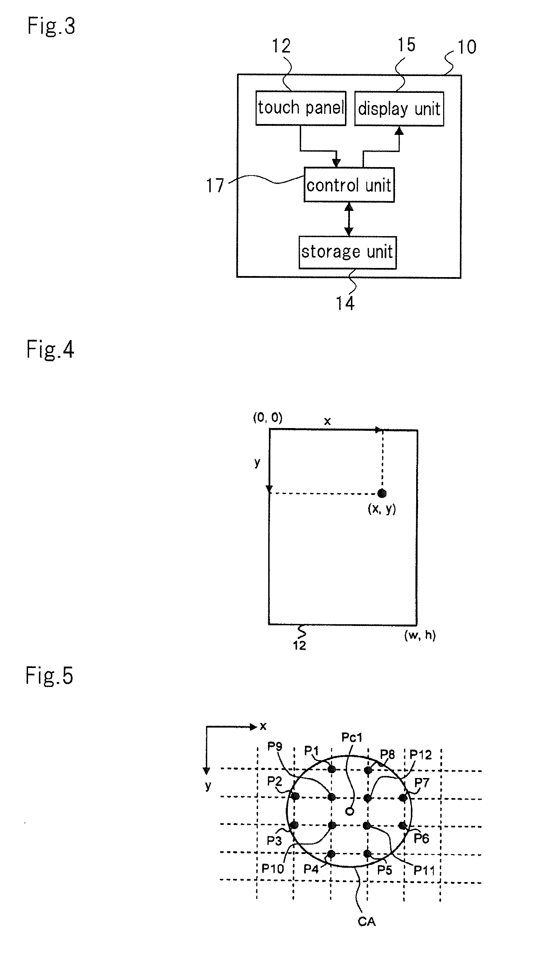

The configuration of the portable terminal of the present exemplary embodiment is described with reference to FIG. 2 and FIG. 3.

FIG. 2 is an outer perspective view showing an example of a portable terminal of the present exemplary embodiment, and FIG. 3 is a block diagram showing an example of the configuration of the portable terminal shown in FIG. 2.

As shown in FIG. 2, portable terminal 10 is of a configuration that includes: touch panel 12 as a manipulation unit for allowing the user to apply characters and instructions as input while viewing the screen. Apart from touch panel 12, a button may be provided for turning ON and OFF the power supply of portable terminal 10, and in FIG. 2, this button has been left out of the figure. FIG. 2 shows a case in which a button for the item "Determine" is shown on the display screen.

As shown in FIG. 3, portable terminal 10 has touch panel 12, display unit 15, storage unit 14 that stores information for causing display unit 15 to display, and control unit 17 for controlling each component.

In the present exemplary embodiment, touch panel 12 is a construction that is overlaid on display unit 15 such as an LCD (Liquid Crystal Display). A case is here described in which touch panel 12 serves as the manipulation unit, but the manipulation unit may be any input device that is capable of detecting manipulation of the display unit such as a proximity panel or a touch pad. In addition, the manipulation unit is not limited to a construction that is overlaid on the display unit, and as an example, when the manipulation unit is a touch pad, a construction is also possible in which the manipulation unit and display unit are not stacked, such as in a notebook PC. Still further, the display unit need not be unified with the portable terminal if the display unit and portable terminal are connected so as to allow communication.

A method of detecting positions in the detectable region of touch panel 12 is here described. FIG. 4 shows an example of the coordinates for the detectable region of a touch panel.

Although the method of detecting the position of the manipulation means is here described for a case in which contact manipulation, which is manipulation realized by contact of the user's finger, is detected and the detected area is the contact area, the invention may also be applied to a case in which the manipulation unit is a proximity panel, proximate manipulation, which is manipulation by means of the proximity of the user's finger, is detected, and the detected area is the proximity area. Although a case is described in which the manipulation means that is detected by touch panel 12 is a human finger, other objects such as a pen may also be used.

As shown in FIG. 4, coordinates are defined in advance in the detectable region of touch panel 12. In the example shown in FIG. 4, in a state in which the orientation of touch panel 12 is as shown in FIG. 2, x-y coordinates are defined that take the upper left corner of the detectable region as the origin, the right-left direction as the x-axis direction, and the up-down direction as the y-axis direction. The maximum value of the x-axis direction is assumed to be w, and the maximum value of the y-axis direction is assumed to be h. Any position of the detectable region can be identified by coordinates (x, y).

When the user's finger contacts touch panel 12, touch panel 12 detects the contact area from the coordinates of the position that the finger contacted as shown below. FIG. 5 is a view for describing the method of detecting the contact area and is a portion of the x-y coordinates shown in FIG. 4. Upon detecting the contact at the coordinates of point P1-point P12, touch panel 12 finds the center coordinates Pc1 from point P1-point P8, and based on lines that join point P1-point P8 in order and center coordinates Pc1, detects contact area CA as the area in which the user's finger made contact.

Touch panel 12 takes center coordinates Pc1 that were computed based on contact area CA shown in FIG. 5 as the center, determines the effective area as follows, and reports information of the effective area to control unit 17.

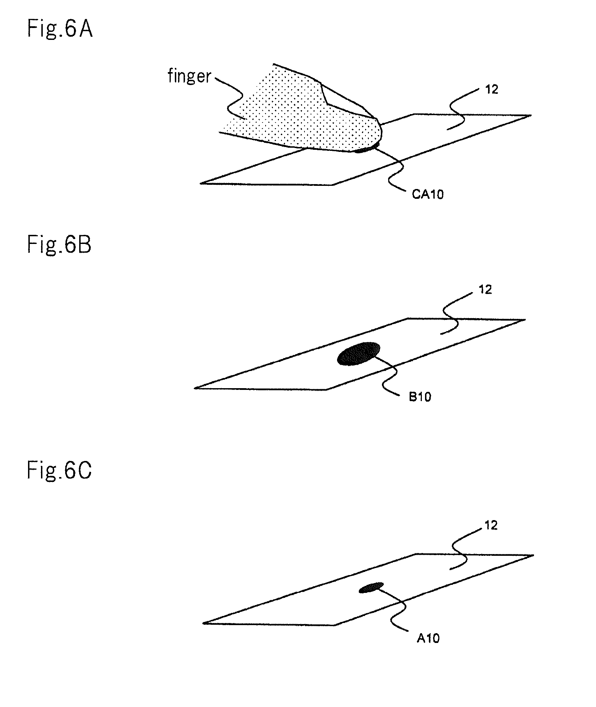

FIGs. 6A to 6C are figures for describing the effective area that the control unit sets to the touch panel. As explained with reference to FIG. 5, touch panel 12 detects contact area CA10 by the contact of the user's finger with touch panel 12 (FIG. 6A).

FIG. 6B shows a case in which, by control unit 17 lowering the determined degree of precision of the effective area for touch panel 12, an effective area of an area that is greater than contact area CA10 is set for the effective area that touch panel 12 determines from contact area CA10. In this case, when touch panel 12 detects contact area CA10 shown in FIG. 6A, touch panel 12 determines high effective area B10 in which contact area CA10 has been enlarged at a predetermined power from the center of contact area CA10 as the effective area and reports effective area information that includes information of the coordinates of this area to control unit 17.

Because decreasing the determined degree of precision of touch panel 12 increases the effective area, high-precision input manipulation is sought in order that the effective area does not miss the borders of the item that the user designates.

FIG. 6C shows a case in which control unit 17, by setting the determined degree of precision of the effective area for touch panel 12 to a higher state (normal state) than for the high effective area, sets an effective area of an area that is smaller than contact area CA10 as the effective area that is determined from contact area CA10 by touch panel 12. In this case, upon detecting contact area CA10 shown in FIG. 6A, touch panel 12 determines low-effective area A10 in which contact area CA10 is reduced at a predetermined power from the center of contact area CA10 as the effective area and reports effective area information that includes information of the coordinates of this area to control unit 17.

Control unit 17 includes a CPU (Central Processing Unit)(not shown) that executes processing in accordance with a program, and memory (not shown) that stores a program. When instructions indicating that information stored in storage unit 14 is to be displayed are applied as input by way of touch panel 12, control unit 17 reads the designated information from storage unit 14 and causes an image of this information to be displayed on display unit 15.

Upon receiving effective area information from touch panel 12, control unit 17 identifies the region that was selected on the image by the user based on the image that is being displayed on display unit 15 and the effective area information that was received from touch panel 12. If an item is displayed in the identified region, control unit 17 then checks whether the effective area that corresponds to the effective area information protrudes beyond the borders of the item displayed on the screen. Control unit 17 thus identifies the designated area that is the area designated by the user's finger based on the effective area that was determined by touch panel 12. When the effective area is accommodated within the item, control unit 17 executes the process that corresponds to that item, but when even a portion of the effective area protrudes outside the item, control unit 17 recognizes that the user did not select that item and, without performing any processing, enters a state of waiting for the user's next instructions.

Upon receiving instructions to use a function that requires accurate input manipulation, control unit 17 sets the effective area that touch panel 12 determines based on the contact area to the high effective area. Alternatively, upon receiving instructions to use a function in which accurate input manipulation is not required, control unit 17 sets the effective area that touch panel 12 determines based on the contact area to the low effective area. Instructions for switching between these two functions may be reported to control unit 17 by the user's manipulation of touch panel 12 in a state in which touch panel 12 displays a screen for switching between the two functions or may be reported to control unit 17 by the user pressing a button not shown in FIG. 2.

The effective area that is set in touch panel 12 is assumed to be set in advance to the low effective area as the standard condition. When portable terminal 10 is in normal operation, the effective area of the touch panel is assumed to be set to the low effective area.

The operation of portable terminal 10 of the present exemplary embodiment is next described.

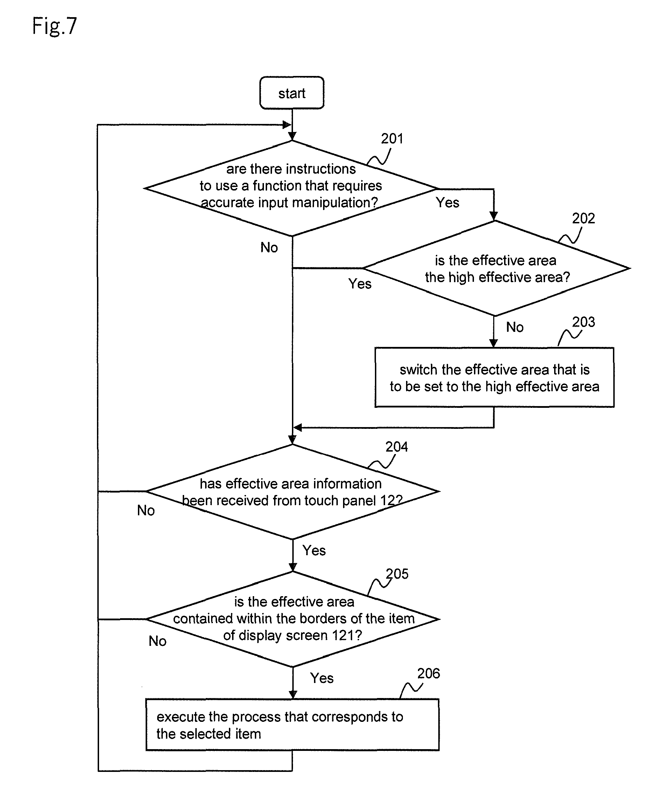

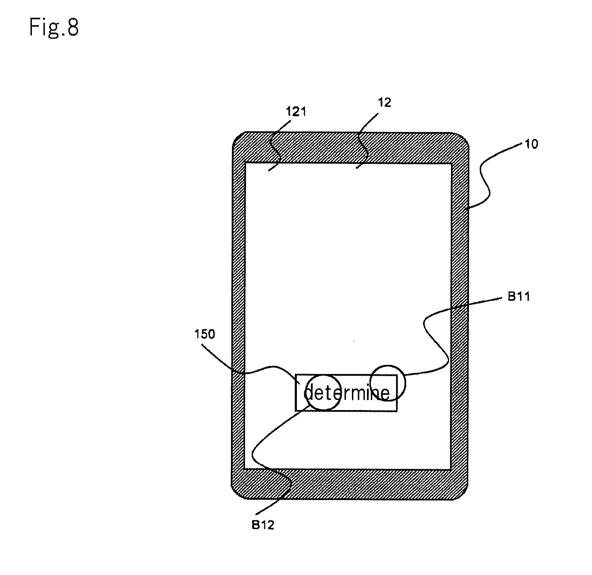

FIG. 7 is a flow chart showing the operating procedure of the portable terminal of the present exemplary embodiment. FIG. 8 is a view for describing the operation of the portable terminal of the present exemplary embodiment. A case is here assumed in which the effective area of touch panel 12 is set in advance to the high effective area.

When the user turns on the power supply of portable terminal 10 to activate portable terminal 10, control unit 17 judges whether or not instructions to use a function, in which accurate input manipulation is required, have been received (Step 201). If instructions to use a function, in which accurate input manipulation is required, are received in Step 201, control unit 17 checks whether the effective area has been set to the high effective area (Step 202).

If the effective area is set to the low effective area in Step 202, control unit 17 switches the effective area that is set in touch panel 12 from the low effective area to the high effective area (Step 203). On the other hand, if instructions to use a function, in which accurate input manipulation is required, has not been received in Step 201 or if the effective area is set to the high effective area in Step 202, control unit 17 proceeds to the process of Step 204. In this case, the effective area is set to the high effective area, and control unit 17 therefore proceeds to Step 204.

When the user manipulates touch panel 12 to apply instructions to read information that is saved in storage unit 14, control unit 17 reads the designated information from storage unit 14 and displays the image on display unit 15. It is here assumed that display screen 121 shown in FIG. 8 is displayed on display unit 15.

Determination button 150 for the user to instruct "determination" is shown on the lower side of display screen 121 of FIG. 8, and although characters or images are shown above determination button 150, the display of this content is here omitted. Determination button 150 corresponds to display content that requires accurate input manipulation.

When the user's finger contacts determination button 150 of touch panel 12 shown in FIG. 8, touch panel 12 detects the contact area of the finger and judges the high effective area from the contact area. A case is first described in which touch panel 12 judges the effective area to be effective area B11 shown in FIG. 8 from the contact area.

Upon judging an effective area to be effective area B11 from the contact area, touch panel 12 transmits the effective area information of effective area B11 to control unit 17. Control unit 17, upon receiving the effective area information from touch panel 12 (Step 204), identifies the region of determination button 150 that the user selected on the image based on the image that is being displayed on display unit 15 and the effective area information. Control unit 17 next checks whether effective area B11 that corresponds to the effective area information protrudes from the borders of determination button 150 (Step 205). As shown in FIG. 8, a portion of effective area B11 protrudes from the region of determination button 150, and as a result of the determination of Step 205, control unit 17 therefore returns to Step 201 without executing any process.

When the effective area that is determined by touch panel 12 from the contact area is set to the low effective area, the effective area is smaller than effective area B11 shown in FIG. 8, and because all of the effective area is then accommodated within the region of determination button 150, control unit 17 executes the process that corresponds to determination button 150.

A case is next described in which, based on the contact area, touch panel 12 judges the effective area to be effective area B12 shown in FIG. 8.

Upon judging the effective area to be effective area B12 from the contact area, touch panel 12 transmits effective area information of effective area B12 to control unit 17. Control unit 17, having received the effective area information from touch panel 12 (Step 204), identifies the region of determination button 150 that the user selected on the image based on the image that is displayed on display unit 15 and the effective area information. Control unit 17 next checks whether effective area B12 that corresponds to the effective area information protrudes outside the borders of determination button 150 (Step 205). As shown in FIG. 8, all of effective area B12 is accommodated within the region of determination button 150, and as a result of the determination executed in Step 205, control unit 17 carries out the process that corresponds to determination button 150 (Step 206) and then returns to Step 201.

Thus, the determination of a large effective area by touch panel 12 prevents processing that corresponds to the "determination button" if the user does not accurately contact the "determination button" and prevents the occurrence of erroneous manipulation such as manipulation not intended by the user.

The display content that is to be determined by a high effective area was described for the case of a "determination button" but may be display content other than the "determination button." For example, the display contact that is to be determined by the high effective area may be an "originate call button" when portable terminal 10 is a portable telephone, or, when portable terminal 10 is a device that can connect to the Internet, may be a "browser button" for receiving a web page from a server by way of the Internet and displaying the web page, or may be a button of an item linked to fees charged to the user.

In the present exemplary embodiment, the touch panel determines and supplies different types of effective area, according to the determined degree of precision, that is set for the contact area that is detected. When the user uses a function in which accurate input manipulation is required, setting the determined degree of precision of the effective area to a low value causes the touch panel 12 to determine a large effective area. When the touch panel determines a large effective area, accurate input manipulation by the user is necessary. As a result, despite the erroneous input of instructions not intended by the user to the portable terminal due to the user's inattention, the portable terminal is more prone to reject the instructions of an inaccurate input manipulation, whereby erroneous operation of the portable terminal can be prevented.

On the other hand, when the user uses a function that does not require accurate input manipulation, setting the determined degree of precision of the effective area to the normal state causes the touch panel to determine and supply a smaller effective area. When touch panel 12 determines a smaller effective area, the effective area less frequently protrudes from the borders of an item displayed on the screen, making the item easier to select and thus improving operability.

Setting the effective area larger increases the necessity for accurate input manipulation, and as a result, if another person should peek at a user's input manipulation and then imitate this input manipulation, the portable terminal is more likely to reject the input instructions. As a result, unauthorized use of a portable terminal by another person can be prevented.

The present exemplary embodiment not only improves operability without necessitating a complicated user interface, but also prevents erroneous input or erroneous manipulation by accepting only accurate manipulation and not accepting inaccurate user manipulation. In addition, by accepting only accurate manipulation that can be applied only by the user, the present invention is also able to eliminate unauthorized manipulation by another user who infers the input content from finger movements.

### Working Example 1

In this working example, the areas of the high effective area and low effective area that are set based on the contact area differ from the case described with reference to FIGs. 6A to 6C. In the present working example, only those points that differ from the configuration of portable terminal 10 that was explained in the exemplary embodiment described above are described in greater detail, and detailed explanation of identical configuration is here omitted.

In the present working example as well, control unit 17 is able to set two types, a high effective area and a low effective area, as the effective area which touch panel 12 determines, but in contrast to the case described with reference to FIGs. 6A to 6C, the high effective area and low effective area both reduce the contact area. However, the reduction ratio of the high effective area is smaller than that of the low effective area, and the area of the high effective area is therefore greater than for the low effective area.

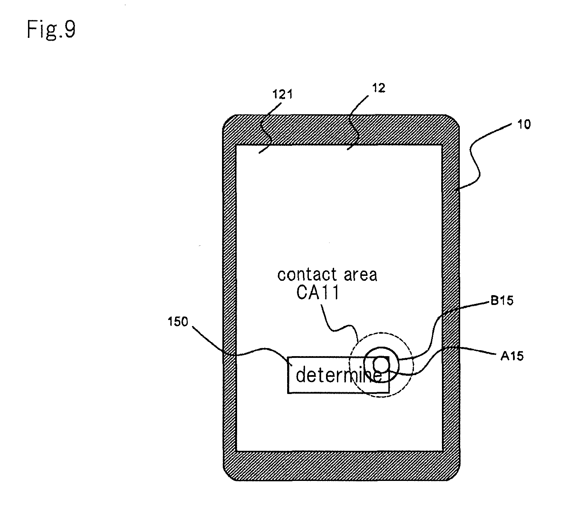

The operation of portable terminal 10 of the present working example is described with reference to FIG. 7 and FIG. 9. FIG. 9 is a view for describing the operation of the portable terminal of the present working example.

In Step 204 shown in FIG. 7, touch panel 12 determines the effective area from contact area CA11 and notifies control unit 17. When the effective area determined by touch panel 12 is set to the low effective area, touch panel 12 reports effective area information of effective area A15 to control unit 17. By the determination executed in Step 205, effective area A15 is accommodated within the borders of determination button 150, and control unit 17 therefore executes the process that corresponds to determination button 150.

On the other hand, when the effective area that is determined by touch panel 12 is set to the high effective area, touch panel 12 reports the effective area information of effective area B 15 to control unit 17. By the determination executed in Step 205, effective area B 15 protrudes beyond the borders of determination button 150, and control unit 17 therefore does not execute any process.

Even when both the high effective area and the low effective area are smaller than the contact area as in the present working example, the same effect is obtained as in the above-described exemplary embodiment.

### Working Example 2

In the present working example, the detectable regions of a touch panel are classified and set in advance as regions in which accurate input manipulation is not required (hereinbelow referred to as "region in which normal input manipulation is acceptable") and regions in which accurate input manipulation is required, and the type of effective area is switched to correspond with the classified regions.

In the present working example, moreover, points that differ from the configuration of portable terminal 10 explained in the exemplary embodiment described hereinabove are described in detail, and detailed explanation for identical configuration is omitted.

Regarding the image data for bringing about display on display unit 15, the type of effective area that is to be determined by touch panel 12 is set for each region of the image that is displayed on display unit 15. When reading the image data from storage unit 14 to bring about display on display unit 15, control unit 17 of the present working example sets the high effective area or the low effective area in touch panel 12 in correspondence with the regions of the image of the image data.

Although the present working example is described for a case in which image data are saved in storage unit 14, the present invention is not limited to image data that are saved in storage unit 14, and if portable terminal 10 is a device that can communicate with the Internet, the type of effective area may also be set in advance in the image of a web page that is received by way of the Internet.

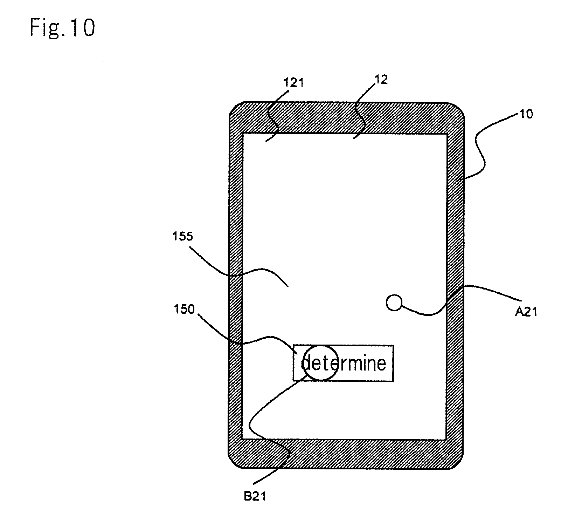

The operation of portable terminal 10 of the present working example is described with reference to FIG. 7 and FIG. 10. FIG. 10 is a view for describing the operation of the portable terminal of the present working example.

In the display regions of display screen 121 shown in FIG. 10, the region in which determination button 150 is displayed corresponds to a region in which accurate input manipulation is required, and the high effective area is set in the region of determination button 150. In addition, region 155 apart from determination button 150 corresponds to the region in which normal input manipulation is acceptable, and the low effective area is set in region 155.

Control unit 17 reads the designated image data from storage unit 14 to bring about display on display unit 15 in accordance with the user's instructions. When the user's finger subsequently contacts region 155 in Step 204 shown in FIG. 7, touch panel 12 determines the effective area from the contact area and notifies control unit 17. The effective area is set to the low effective area in region 155, and touch panel 12 therefore reports effective area information of effective area A21 to control unit 17. In Step 205, control unit 17 determines whether effective area A21 fits within the item in region 155. In the example shown in FIG. 10, an item is not displayed at the position of effective area A21, and control unit 17 therefore does not execute any process.

On the other hand, when the user's finger contacts determination button 150 in Step 204 shown in FIG. 7, touch panel 12 determines the effective area from the contact area and notifies control unit 17. The effective area is set to the low effective area in determination button 150, and touch panel 12 therefore reports the effective area information of effective area B21 to control unit 17. In Step 205, control unit 17 determines whether effective area B21 fits within the borders of determination button 150. In the example shown in FIG. 10, effective area B21 fits within the borders of determination button 150, and control unit 17 therefore executes the process that corresponds to determination button 150.

By setting the high effective area to display content in which accurate input manipulation is required and setting the low effective area to display content in which accurate input manipulation is not required, i.e., display content in which normal input manipulation is acceptable as in the present working example, erroneous manipulation can be prevented while maintaining usability.

### Working Example 3

As an example of a "function in which accurate input manipulation is required" in the exemplary embodiment described hereinabove, this working example relates to a case of a function for releasing a manipulation lock that is set to a state in which input manipulation to the touch panel is not accepted.

In the present working example, points that differ from the configuration of portable terminal 10 described in the exemplary embodiment described above are described in detail, and detailed explanation regarding identical configuration is here omitted.

A lock-release pattern is registered in advance in storage unit 14 of the present working example as a pattern that indicates the track of movement of an effective area for releasing the manipulation lock. This effective area may be the high effective area or the low effective area. Control unit 17 of the present working example, upon input of instructions indicating release of the manipulation lock, sets the effective area of touch panel 12 to the high effective area. Control unit 17 then reads the path of movement of the high effective area from the effective area information that was received from touch panel 12 and checks whether the path of movement of the high effective area and the lock release pattern coincide. If the path of movement of the high effective area and the lock release pattern match, control unit 17 releases the manipulation lock. In the present working example, the track of movement of the high effective area for releasing the manipulation lock corresponds to display content in which accurate input manipulation is required.

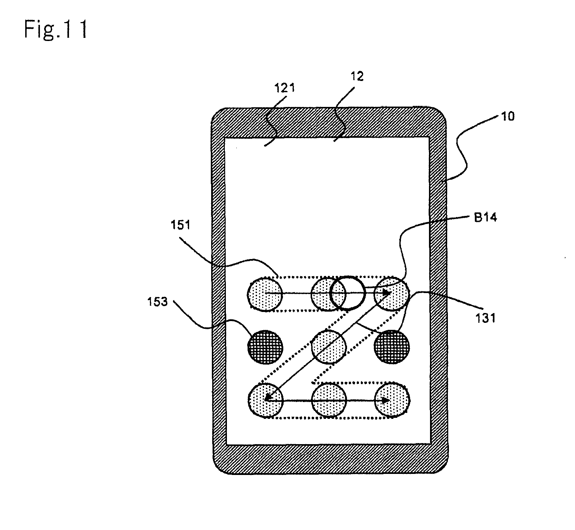

The operation of portable terminal 10 of the present working example is next described. FIG. 11 is a view for describing the operation of the portable terminal of the present working example.

It is assumed that pattern information of the track of movement of the effective area shown by the broken lines of FIG. 11 has been registered in advance in storage unit 14.

The user applies as input instructions specifying that the manipulation lock is to be released. The instructions may be input manipulation realized by the user pressing a button not shown in FIG. 11, or may be the input manipulation of once touching touch panel 12 in which the manipulation lock is activated. Control unit 17 brings about the display of lock-release guide buttons 153 on display unit 15 as shown in FIG. 11. The user's finger next touches touch panel 12, and when the user moves his or her finger along lock-release manipulation area 151, control unit 17 receives from touch panel 12 information of the high effective area along this movement path 131. If movement path 131 of effective area B14 determined by touch panel 12 completes movement along lock-release manipulation area 151 without diverging from lock-release manipulation area 151, control unit 17 releases the manipulation lock.

According to the present working example, because accurate input manipulation is necessary when releasing the manipulation lock, even if another person should surreptitiously observe the input manipulation, identical manipulation by the other person will be difficult and the portable terminal will be likely to reject the unauthorized input manipulation. As a result, unauthorized use of the portable terminal by another person can be prevented.

In addition, touch panel 12 may also determine the effective area to be large over the entire display screen, or may determine the effective area to be small in areas other than manipulation lock release manipulation area 151.

### Second Exemplary Embodiment

In the first exemplary embodiment, a case was described in which the control unit changed the determined degree of precision of the effective area in the touch panel and the touch panel determined the size of the effective area, but in the present exemplary embodiment, the determined degree of precision of the effective area is set to the normal state (predetermined value) in the touch panel and the size of the effective area is changed in the control unit.

In the present exemplary embodiment, only points that differ from portable terminal 10 that was described in the first exemplary embodiment will be described in detail, and detailed explanation regarding identical configuration is here omitted.

The configuration of portable terminal 10 of the present exemplary embodiment is first described.

Touch panel 12 in the present exemplary embodiment determines a first effective area from the contact area and transmits effective area information of the first effective area to control unit 17.

When control unit 17 of the present exemplary embodiment receives effective area information from touch panel 12, control unit 17 recognizes a second effective area based on the first effective area, and based on the image that is being displayed on display unit 15 and the second effective area, identifies the region that the user is selecting on the image. If an item is displayed in the region that was identified, control unit 17 then checks whether the second effective area protrudes from the borders of the item displayed on the screen. If the second effective area is accommodated within the item, control unit 17 executes the process that corresponds to the item, but if even a portion of the second effective area protrudes outside the item, control unit 17 recognizes that the user has not selected the item, and without executing any processing, enters a state of waiting for the user's next instructions.

When control unit 17 receives instructions to use a function in which accurate input manipulation is required, control unit 17 sets the second effective area that is recognized based on the first effective area to a high effective area in which the first effective area is magnified by a power determined in advance from the center of the first effective area. When control unit 17 receives instructions to use a function in which accurate input manipulation is not required, control unit 17 sets the second effective area that is recognized based on the first effective area to the low effective area in which the first effective area is reduced by a predetermined power from the center of the first effective area.

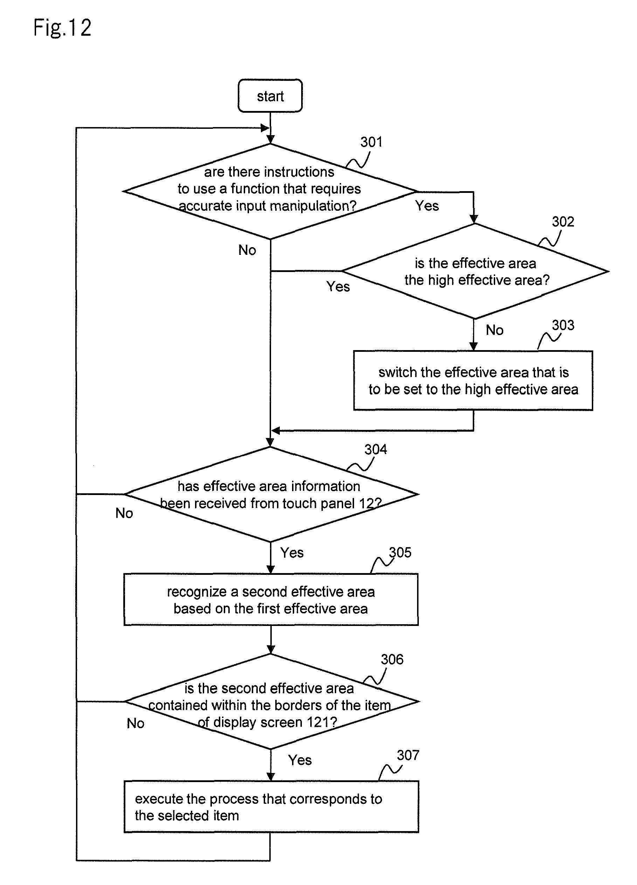

The operation of the portable terminal of the present exemplary embodiment is next described. FIG. 12 is a flow chart showing the operating procedure of the portable terminal of the present exemplary embodiment.

The operations of Steps 301 and 302 shown in FIG. 12 are identical to Steps 201 and 202 of FIG. 7, and detailed explanation is therefore here omitted.

When the effective area is set to the low effective area in Step 302, control unit 17 switches the effective area that is recognized from the contact area from the low effective area to the high effective area (Step 303). On the other hand, when instructions to use a function, in which accurate input manipulation is required, are not received in Step 301, or when the effective area is set to the high effective area in Step 302, control unit 17 proceeds to the process of Step 304.

Control unit 17 causes information that is saved in storage unit 14 to be displayed on display unit 15 in accordance with the user's instructions. When the user's finger touches touch panel 12, touch panel 12 detects the contact area of the finger and determines the first effective area from the contact area. Touch panel 12 next transmits the effective area information of the first effective area to control unit 17.

When control unit 17 receives the effective area information from touch panel 12 (Step 304), control unit 17 recognizes the second effective area based on the first effective area (Step 305). Control unit 17 then identifies the region that the user is selecting on the image based on the image that is being displayed on display unit 15 and the second effective area. If an item is displayed in the identified region, control unit 17 checks whether the second effective area protrudes from the borders of the item displayed on the screen (Step 306). If, as a result of the determination executed in Step 306, the second effective area is accommodated within the item, control unit 17 executes the process that corresponds to the item (Step 307).

If, as a result of the determination executed in Step 306, even a portion of the second effective area protrudes outside the item, control unit 17 recognizes that the user has not selected the item, and without executing any process, returns to Step 301.

In the present exemplary embodiment as well, the same effects can be obtained as in the first exemplary embodiment. In addition, Working Example 1 to Working Example 3 in the first exemplary embodiment may be applied to the method of setting the high effective area and the low effective area in the present exemplary embodiment. For example, although a case has been described in the present exemplary embodiment in which control unit 17 sets the second effective area in accordance with instructions as to whether to use a function in which accurate input manipulation is required, the second effective area may be set as described in the second working example, according to whether the content being displayed on display unit 15 is content that requires accurate input manipulation.

Although cases were described in the above-described exemplary embodiments and working examples in which, as the method of setting two types of effective area, the size (area) of the effective area is changed, the shape of the effective area may also be changed. In this case, combining the shape of the high effective area with the size of a region in which accurate input manipulation is required enables the reception of only instructions realized by more accurate input manipulation.

In addition, the present invention is not limited to an electronic device and information processing method, but may also be a program for causing a computer to execute the information processing method of the above-described exemplary embodiment, and may also be a recording medium on which the program is recorded to allow reading to a computer.

As an exemplary advantage according to the invention, not only is the operability improved, but erroneous input or erroneous manipulation can also be prevented.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2012-057226 filed on March 14, 2012, the content of which is incorporated by reference.

### Explanation of Reference Numbers

- 10: portable terminal
- 12: touch panel
- 14: storage unit
- 15: display unit
- 17: control unit
- A10: low effective area
- B10: high effective area
- CA: contact area

## Claims

1. An electronic device comprising:
a manipulation unit that detects manipulation of a manipulation means with respect to a display unit and that determines and supplies an effective area based on a detected area that is the area that was detected; and
a control unit that identifies a designated area that is an area that was designated by said manipulation means based on said effective area;
wherein said control unit sets said effective area in accordance with display content that is displayed on said display unit.

2. The electronic device according to claim 1, wherein:
said control unit sets said effective area according to said display content to a low effective area that is an area no greater than a predetermined area or to a high effective area that is an area larger than the low effective area.

3. The electronic device according to claim 2, wherein:
when said display content is display content that requires accurate input manipulation, said control unit sets said effective area to said high effective area, and when said display content is display content that does not require accurate input manipulation, sets said effective area to said low effective area.

4. The electronic device according to claim 3, further comprising:
a storage unit that stores a pattern that indicates a track of movement of said effective area for releasing a manipulation lock that sets a state in which input manipulation to said manipulation unit can not be received;
wherein said control unit, upon receiving as input instructions to release said manipulation lock, sets said effective area to said high effective area, and when the path of movement of said high effective area received from said manipulation coincides with said track of movement of said pattern, releases said manipulation lock.

5. The electronic device according to claim 2, wherein:
said control unit, when said display content is an item that is linked to fees charged to a user, sets said effective area to said high effective area.

6. An electronic device comprising:
a manipulation unit that detects manipulation of a manipulation means with respect to a display unit and that determines and supplies a first effective area based on a detected area that is the area that was detected; and
a control unit that, based on a second effective area that was recognized according to said first effective area, identifies a designated area that is the area designated by said manipulation means;
wherein said control unit sets said second effective area in accordance with display content that is displayed on said display unit.

7. An information processing method realized by an electronic device that has a manipulation unit and a control unit, comprising steps of:
said manipulation unit detecting manipulation of a manipulation means with respect to a display unit, and determining and supplying as output a first effective area based on a detected area that is the area that was detected;
said control unit recognizing a second effective area based on said first effective area according to display content that is displayed on said display unit; and
said control unit identifying a designated area that is an area that was designated by the manipulation means based on said second effective area.

8. A computer-readable data storage medium having a program for causing a computer that is equipped with a manipulation unit to execute procedures of:
upon said manipulation unit detecting manipulation of a manipulation means with respect to a display unit and determining a first effective area based on a detected area that is the area that was detected, recognizing a second effective area based on said first effective area according to display content that is displayed on said display unit; and
identifying a designated area that is an area designated by said manipulation means based on said second effective area.
